# EUROPÄISCHE PATENTANMELDUNG

(11) **EP 4 764 188 A1**
(43) Veröffentlichungstag der Anmeldung: **24.06.2026**
(21) Anmeldenummer: 24220996.3
(22) Anmeldetag: 18.12.2024
(51) Int. Cl.: F02C 9/00, F01D 21/12, F01D 21/00

(54) **VERFAHREN ZUM BETREIBEN EINES GASTURBINENTRIEBWERKS**

(71) Anmelder: Rolls-Royce Deutschland Ltd & Co KG, 15827 Blankenfelde-Mahlow (DE)
(72) Erfinder: BAUER, Raphael, 15827 Blankenfelde-Mahlow (DE)

(57) **Zusammenfassung**

Die Offenbarung betrifft ein Verfahren zum Betreiben eines Gasturbinentriebwerks (1000) eines Flugzeugs (2000), wobei das Gasturbinentriebwerk (1000) eine elektronische Steuereinheit (1300), aufweist, und wobei das Verfahren umfasst: Erfassen einer für einen Triebwerkszustand (ZT) des Gasturbinentriebwerks (1000) charakteristischen Messgröße (MC) mittels eines mit der elektronischen Steuereinheit (1300) signalführend gekoppelten Sensors (1310); Bei einem Überschreiten eines kritischen Grenzwerts (MC1): Bestimmen eines kritischen Triebwerkszustands (ZT1) und/oder einer kritischen Restlebensdauer (RTK), und Einleiten von unmittelbaren Gegenmaßnahmen (GMU) zum sicheren Betrieb.

Gemäß der Offenbarung ist bei einem Überschreiten eines vorkritischen Grenzwerts (MC0) vorgesehen: Bestimmen eines vorkritischen Triebwerkszustands (ZT0) und/oder einer vorkritischen Restlebensdauer (RTV), und Einleiten von geplanten Maßnahmen (GMG) für einen optimierten Betrieb; wobei der vorkritische Grenzwert (MC0) niedriger ist als der kritische Grenzwert (MC1).

## Beschreibung

Die Offenbarung betrifft ein Verfahren zum Betreiben eines Gasturbinentriebwerks, ein Gasturbinentriebwerk und ein Flugzeug. Das Betreiben des Gasturbinentriebwerks kann insbesondere das Warten des Gasturbinentriebwerks umfassen.

Gasturbinentriebwerke werden insbesondere zum Antrieb von Luftfahrzeugen eingesetzt. Ein sicherer und wirtschaftlicher Betrieb von Gasturbinentriebwerken ist daher von hoher Bedeutung.

Ein System zur sensorischen Überwachung von Gasturbinentriebwerken anhand von Fluideigenschaften ist beispielsweise aus der DE10 2015 226 732 A1 oder der DE 10 2017 205 573 A1 bekannt.

Obwohl derartige Ansätze bereits geeignet sein können, die Sicherheit eines Gasturbinentriebwerks und/oder eines von dem Gasturbinentriebwerk angetriebenen Flugzeugs zu erhöhen, besteht weiterer Verbesserungsbedarf. Insbesondere wäre eine Möglichkeit wünschenswert, einen sicheren Betrieb des Gasturbinentriebwerks in planbarerer und wirtschaftlicherer Weise zu ermöglichen.

Die Offenbarung schlägt in einem ersten Aspekt ein Verfahren mit den Merkmalen des Anspruchs 1 vor. Die Offenbarung geht aus von einem Verfahren zum Betreiben eines Gasturbinentriebwerks eines Flugzeugs, wobei das Gasturbinentriebwerk eine elektronische Steuereinheit, aufweist, und wobei das Verfahren umfasst: Erfassen einer für einen Triebwerkszustand des Gasturbinentriebwerks charakteristischen Messgröße mittels eines mit der elektronischen Steuereinheit signalführend gekoppelten Sensors; bei einem Überschreiten eines kritischen Grenzwerts: Bestimmen eines kritischen Triebwerkszustands und/oder Einleiten von unmittelbaren Gegenmaßnahmen zum sicheren Betrieb.

Gemäß der Offenbarung ist vorgesehen, dass das Verfahren bei einem Überschreiten eines vorkritischen Grenzwerts weiter umfasst: Bestimmen eines vorkritischen Triebwerkszustands und/oder Einleiten von geplanten Maßnahmen für einen optimierten Betrieb; wobei der vorkritische Grenzwert niedriger ist als der kritische Grenzwert.

Die Offenbarung schließt die Erkenntnis ein, dass eine für den Triebwerkszustand des Gasturbinentriebwerks charakteristische Messgröße, die insbesondere normalerweise für eine unmittelbare Beeinflussung, zum Beispiel der Steuerung bzw. Regelung, des Gasturbinentriebwerks genutzt wird, für einen weiteren Zweck, zum Beispiel das Einleiten von geplanten Maßnahmen für einen optimierten Betrieb, genutzt werden kann. Dies basiert auf der Erkenntnis, dass mittels einer für den momentanen Triebwerkszustand charakteristischen Messgröße auch Rückschlüsse auf die verbleibende Lebensdauer des Gasturbinentriebwerks gezogen werden kann, indem eine Restlebensdauer bestimmt wird. Der Begriff "Restlebensdauer des Gasturbinentriebwerks" kann sich insbesondere auch auf die verbleibende Lebensdauer einzelner Komponenten des Gasturbinentriebwerks beziehen, welche zum sicheren Betrieb des Gasturbinentriebwerks notwendig sind.

Durch Festlegen und Überwachen eines vorkritischen Grenzwerts kann, insbesondere ohne zusätzlichen apparativen Aufwand, ein vorkritischer Triebwerkszustand bestimmt werden, der zwar einen generellen Handlungsbedarf am Gasturbinentriebwerk anzeigt, jedoch noch Möglichkeit für einen geregelten Weiterbetrieb lässt. Als "geplante Maßnahmen für einen optimierten Betrieb" werden im Rahmen der Anmeldung insbesondere Wartungsmaßnahmen verstanden.

Vorteilhafte Weiterbildungen der Offenbarung sind den Unteransprüchen zu entnehmen und geben im Einzelnen vorteilhafte Möglichkeiten an, das oben erläuterte Konzept hinsichtlich weiterer Vorteile zu realisieren.

In einer Weiterbildung ist vorgesehen, dass die unmittelbaren Gegenmaßnahmen zum sicheren Betrieb ein Bereitstellen eines Warnhinweises und/oder eine Abschaltung des Gasturbinentriebwerks umfassen. Die Abschaltung kann beispielsweise innerhalb eines Zeitraums kleiner oder gleich 10 min, kleiner oder gleich 5 min, kleiner oder gleich 2 min, kleiner oder gleich 1 min, erfolgen. Der Zeitraum kann vorteilhaft so gewählt werden, dass ein Abschalten innerhalb der Restlebensdauer noch sicher möglich ist. Es kann vorgesehen sein, dass die unmittelbaren Gegenmaßnahmen durch einen menschlichen Bediener, insbesondere den Piloten, eingeleitet werden, nachdem diesem der kritische Triebwerkszustand durch das Bereitstellen eines Warnhinweises angezeigt wird. Im Vergleich zu anderen Maßnahmen am Triebwerk, insbesondere geplanten Maßnahmen für einen optimierten Betrieb, umfassen die unmittelbaren Gegenmaßnahmen zum sicheren Betrieb zeitkritischere Maßnahmen, um ein Versagen kritischer Bauteile abzuwenden, insbesondere da ein Ausbleiben derartiger unmittelbarer Gegenmaßnahmen Schaden am Gasturbinentriebwerk und/oder am Flugzeug zur Folge haben kann.

Es kann in einer Weiterbildung vorgesehen sein, dass die geplanten Maßnahmen für einen optimierten Betrieb ein Bereitstellen eines Kontrollhinweises und/oder Einleiten eines Instandhaltungseinsatzes des Gasturbinentriebwerks und/oder ein Anfordern eines Ersatzteils und/oder das Anfordern einer technischen Dienstleistung und/oder das Übermitteln einer Zustandsmeldung, insbesondere an ein Überwachungs- oder Instandhaltungssystem, umfassen.

In einer Weiterbildung ist vorgesehen, dass in Abhängigkeit des Triebwerkszustands eine Lebensdauerverbrauchsrate bestimmt wird, mittels der eine Restlebensdauer bestimmt werden kann. Durch eine Bestimmung, insbesondere Prognose, der Restlebensdauer auf Basis der Lebensdauerverbrauchsrate kann zwischen unterschiedlichen Triebwerkszuständen unterschieden werden, um eine dem Triebwerkszustand entsprechende Einleitung von Instandhaltungseinsätzen zu ermöglichen. Insbesondere ist vorgesehen, dass bei Erreichen des vorkritischen Triebwerkszustands, d.h. bei Erreichen des vorkritischen Grenzwerts der charakteristischen Messgröße, eine vorkritische Lebensdauerverbrauchsrate bestimmt wird; und bei Erreichen des kritischen Triebwerkszustands, d.h. bei Erreichen des kritischen Grenzwerts der charakteristischen Messgröße, eine kritische Lebensdauerverbrauchsrate bestimmt wird. Insbesondere ist die kritische Lebensdauerverbrauchsrate höher als die vorkritische Lebensdauerverbrauchsrate.

In einer Weiterbildung ist vorgesehen, dass der Sensor ein Thermoelement, ein thermooptischer Sensor, ein Vibrationssensor oder ein Näherungssensor ist. Der Sensor kann als Temperatursensor ausgebildet sein. Insbesondere ist der Sensor ausgebildet, mit einem Messfluid, beispielsweise einem Primär- oder Sekundärluftstrom, in Kontakt zu stehen. Auch kann ein erweiterter Messaufbau vorgesehen sein, mittels dem ein Messfluid zum Erfassen der Messgröße aufgenommen werden kann, z. B. umfassend eine Messkammer und/oder ein Messrohr.

Es kann vorteilhaft vorgesehen sein, dass die für den Triebwerkszustand charakteristische Messgröße eine für den Triebwerkszustand charakteristische Temperatur ist. Entsprechend kann dann der vorkritische Grenzwert eine vorkritische Grenztemperatur, und der kritische Grenzwert eine kritische Grenztemperatur sein. Insbesondere kann der Sensor ein bereits zur Steuerung des Gasturbinentriebwerks vorhandener und mit der elektronischen Steuereinheit des Gasturbinentriebwerks signalführend verbundener Sensor sein. Vorteilhaft kann der Sensor ein einem anderen Primärzweck dienender Sensor sein und/oder die für den Triebwerkszustand charakteristische Messgröße eine einem anderen Primärzweck dienende Messgröße. Ein anderer Primärzweck kann beispielsweise die Steuerung oder Regelung des Gasturbinentriebwerks sein.

Insbesondere kann vorgesehen sein, dass die für den Triebwerkszustand charakteristische Messgröße eine Messgröße in einem sekundären Luftsystem des Gasturbinentriebwerks ist. Der Sensor kann entsprechend zum Erfassen der für den Triebwerkszustand charakteristische Messgröße, insbesondere Temperatur, im sekundären Luftsystem angeordnet sein. Insbesondere im sekundären Luftsystem ist die Temperatur eine aussagekräftige Zustandsgröße zur Charakterisierung des Triebwerkszustands.

Es kann vorgesehen sein, dass die für den Triebwerkszustand des Gasturbinentriebwerks charakteristische Messgröße an oder in einem sicherheitskritischen Bauteil gemessen wird. Das sicherheitskritische Bauteil kann in einem sekundären Luftsystem des Gasturbinentriebwerks angeordnet sein und/oder Teil des sekundären Luftsystem sein in dem Sinne, dass es von Luft des Luftsystems umströmt wird. Die für den Triebwerkszustand des Gasturbinentriebwerks charakteristische Messgröße kann eine Messgröße in einem sekundären Luftsystem des Gasturbinentriebwerks sein. Das sicherheitskritische Bauteil kann beispielsweise durch eine Turbinenstufe, insbesondere eine Hochdruck-Turbinenstufe, gebildet sein. Das sicherheitskritische Bauteil kann insbesondere ein Bauteil sein, welches durch ein Fluid angeströmt oder umströmt ist, welches messtechnisch charakterisiert wird.

In einem zweiten Aspekt wird ein Verfahren zur Planung von Instandhaltungseinsätzen für mindestens ein Gasturbinentriebwerk eines Flugzeugs vorgeschlagen, wobei ein Instandhaltungseinsatz mit einem Verfahren gemäß dem ersten Aspekt eingeleitet wird. Insbesondere können die im Verfahren gemäß dem ersten Aspekt gewinnbaren Informationen bezüglich des Triebwerkszustandes und/oder der Restlebensdauer vorteilhaft zur besseren, insbesondere zustandsbasierten, Planung und Einleitung von Instandhaltungseinsätzen eingesetzt werden.

In einem dritten Aspekt wird eine Vorrichtung vorgeschlagen, die mindestens einen Prozessor; und mindestens einen Speicher umfasst, der computerlesbare Anweisungen enthält, wobei der mindestens eine Prozessor so konfiguriert ist, dass er die computerlesbaren Anweisungen liest, um die Durchführung des Verfahrens gemäß dem ersten oder zweiten Aspekt zu bewirken. Insbesondere kann die Vorrichtung durch eine elektronische Steuereinheit (*electronical engine control -* EEC) des Gasturbinentriebwerks und/oder einen Computer gebildet sein, oder diese umfassen.

In einem vierten Aspekt wird ein Computerprogramm vorgeschlagen, das, wenn es von einem Computer gelesen wird, die Durchführung des Verfahrens gemäß dem ersten oder zweiten Aspekt bewirkt.

In einem fünften Aspekt wird ein Nicht-transitorisches, computerlesbares Speichermedium mit computerlesbaren Anweisungen, die, wenn sie von einem Computer gelesen werden, die Durchführung eines Verfahrens gemäß dem ersten oder zweiten Aspekt bewirken.

In einem sechsten Aspekt wird ein Gasturbinentriebwerk eines Flugzeugs vorgeschlagen, umfassend eine elektronische Steuereinheit oder einen Computer, mindestens einen Verdichter und/oder eine Verdichterstufe, und mindestens eine Turbine und/oder eine Turbinenstufe aufweist, wobei die elektronische Steuereinheit oder der Computer ausgebildet ist zur Durchführung eines Verfahrens gemäß dem ersten oder zweiten Aspekt.

In einem siebten Aspekt wird ein Flugzeug vorgeschlagen, umfassend mindestens ein Gasturbinentriebwerk gemäß dem sechsten Aspekt.

Ausführungsformen der Erfindung werden nun nachfolgend anhand der Zeichnung im Vergleich zum Stand der Technik, welcher zum Teil ebenfalls dargestellt ist, beschrieben.

Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: Ein Gasturbinentriebwerk mit einer elektronischen Steuereinheit, ausgebildet zum Ausführen eines Verfahrens gemäß dem ersten Aspekt der Offenbarung,
- Fig. 2a-c: schematische Diagramme mit einem beispielhaften zeitlichen Verlauf eines Triebwerkszustands des Gasturbinentriebwerks und einer für den Triebwerkszustand charakteristischen Messgröße,
- Fig. 3: ein Ablaufdiagramm zur Verdeutlichung eines Verfahrens gemäß dem ersten Aspekt der Offenbarung,
- Fig. 4: ein Flugzeug gemäß dem siebten Aspekt der Offenbarung mit einem Gasturbinentriebwerk gemäß dem sechsten Aspekt der Offenbarung, sowie eine schematische Darstellung eines Verfahrens zur Planung von Instandhaltungseinsätzen,
- Fig. 5: eine Vorrichtung gemäß dem dritten Aspekt der Offenbarung.

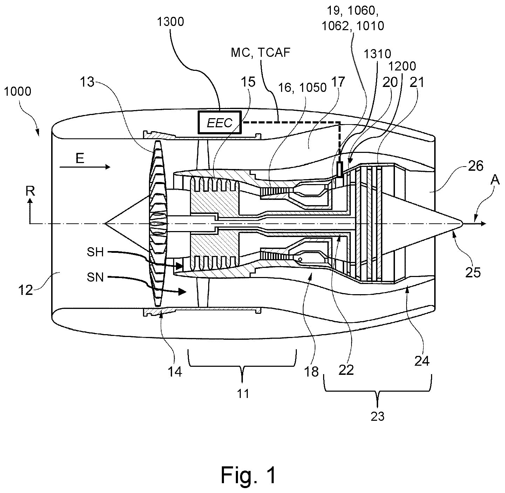

Fig. 1 zeigt schematisch und in einer Schnittdarstellung eine Gasturbinentriebwerks 1000. Entlang einer Triebwerkslängsachse A des Gasturbinentriebwerks 1000 sind Triebwerkskomponenten hintereinander angeordnet. Am Einlass 12 wird mittels eines Fans 13 entlang einer Eintrittsrichtung E Luft angesaugt. Dieser Fan 13 ist in einem Fangehäuse 14 angeordnet und wird von einer Niederdruckturbine 21 einer Turbine 23 über eine Rotorwelle 22 angetrieben. Die Turbine 23 umfasst mindestens eine Turbinenstufe 1060, und schließt sich an einen Verdichter 11 an, der mindestens einen Hochdruckverdichter 16 sowie gegebenenfalls, wie hier gezeigt, noch einen Mitteldruckverdichter 15 aufweist. Der Verdichter 11, bzw. jeweils der Hochdruckverdichter 16 und der Mitteldruckverdichter 15, weist mindestens eine Verdichterstufe 1050 auf. Zur Schuberzeugung versorgt der Fan 13 den Mitteldruckverdichter 15 und den Hochdruckverdichter 16 sowie den Bypasskanal 17 mit Luft. Somit entsteht ein Hauptstrom SH, der durch den Kern der Gasturbine 1000 verläuft, und ein Nebenstrom SN der durch den Bypasskanal 17 verläuft. Die im Verdichter 15, 16 komprimierte Luft wird in der Brennkammer 18 mit Brennstoff vermischt und verbrannt. Mit dem erzeugten Heißgas wird die Turbine 23, welche mindestens eine Hochdruckturbine 19, gegebenenfalls wie hier gezeigt, eine Mitteldruckturbine 20 und gegebenenfalls noch eine Niederdruckturbine 21 umfassen kann, angetrieben. Die Hochdruckturbine 19 umfasst mindestens eine Hochdruckturbinenstufe 1062, die ein sicherheitskritisches Bauteil 1010 sein oder ein solches aufweisen kann. Das Gasturbinentriebwerk 1000 umfasst ein sekundäres Luftsystem 1200, in oder an dem insbesondere das sicherheitskritische Bauteil 1010, und/oder ein Sensor 1310 zur Messung einer charakteristischen Messgröße MC angeordnet sein kann. Der Sensor 1310 kann auch in anderen Positionen angeordnet sein, an denen eine für einen Triebwerkszustand des Gasturbinentriebwerks 1000 charakteristische Messgröße erfasst werden kann. Die bei der Verbrennung freiwerdende Energie wird von der Turbine 23 zum Antreiben des Verdichters 11 und des Fans 13 genutzt, um dann über die in den Bypasskanal 17 geförderte Luft den erforderlichen Schub zu erzeugen. Sowohl der Nebenstrom aus dem Bypasskanal 17 als auch der Hauptstrom strömen über einen Auslass 26 hinaus. Der Auslass 26 weist hierbei üblicherweise eine Schubdüse mit einem zentral angeordneten Austrittskonus 25 auf. Zur Lärmminderung befindet sich im Bereich des Auslasses ein Mischer als Teil einer Mischergruppe 24. Durch die besondere Kontur des Mischers werden der Hauptstrom aus dem Kernstrom und der Nebenstrom aus dem Bypasskanal 17 der Gasturbine 1000 so abgelenkt und vermischt, dass die dabei entstehenden Verwirbelungen das hörbare Lärmniveau absenken. Auch bei abweichend ausgestalteten Gasturbinen kann die vorgeschlagene Lösung Anwendung finden, beispielsweise bei einer beliebigen Art Gasturbinentriebwerk wie zum Beispiel bei einem Open-Rotor oder einem Turboprop-Triebwerk oder einem Getriebe-Fan. Das Gasturbinentriebwerk 1000 umfasst eine elektronische Steuereinheit 1300 (*electronical engine control -* EEC), die vorliegend mit dem Sensor 1310 signalführend verbunden ist.

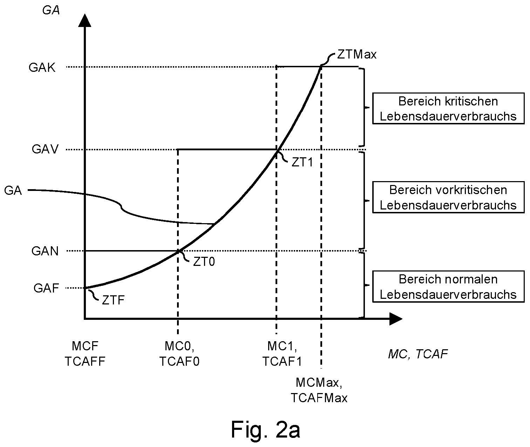

**Fig. 2a** zeigt in einem schematischen Diagramm eine Lebensdauerverbrauchsrate GA in Abhängigkeit einer charakteristischen Messgröße MC. Die Lebensdauerverbrauchsrate GA, die auf einem theoretischen Verständnis, insbesondere basierend auf Analysen, Versuchsergebnissen und statistischen Daten, beruht, ermöglicht die Bestimmung einer voraussichtlichen Restlebensdauer RT. Die Lebensdauerverbrauchsrate GA beschreibt einen Verbrauch bzw. Abnutzung einer Restlebensdauer RT pro Zeiteinheit, beispielsweise pro Flug. Die momentane Lebensdauerverbrauchsrate GA verändert sich in Abhängigkeit der für einen Triebwerkszustand ZT eines Gasturbinentriebwerks 1000 charakteristischen Messgröße MC, hier in Form einer für den Triebwerkszustand ZT charakteristischen Temperatur TCAF.

Ein fehlerfreier, nicht abgenutzter Triebwerkszustand ZTF wird eine Messgröße MCF bei fehlerfreiem Triebwerkszustand zeigen, woraus sich eine fehlerfreie Lebensdauerverbrauchsrate GAF ergibt. Die daraus ermittelte fehlerfreie Restlebensdauer RTF ist die in der Auslegung und Konstruktion angestrebte Lebensdauer für ein fehlerfrei funktionierendes Triebwerk. Durch einzelne Fehlerfälle, oder mehrere isolierte oder kumulierte Fehlerfälle, wie beispielweise abgenutzte Dichtungen oder gerissene Sekundärluftleitungen, ergibt sich eine erhöhte charakteristische Messgröße MC. Diese Erhöhung spiegelt die erhöhte mechanische und/oder thermische Beanspruchung des Gasturbinentriebwerks 1000 wider, die auch in einer erhöhten Lebensdauerverbrauchsrate GA resultiert.

Das physikalische Maximum der charakteristischen Messgröße MC, ein maximaler Grenzwert MCMax, ergibt sich aus der Kombination der schwersten anzunehmenden Fehlerfälle und anspruchsvollsten Betriebszuständen, zusammen als maximaler oder maximalkritischer Triebwerkszustand ZTmax betrachtet. Die sich bei einem maximalen Grenzwert MCmax ergebende Lebensdauerverbrauchsrate wird als kritische Lebensdauerverbrauchsrate GAK angenommen, die in einer kritischen Restlebensdauer RTK resultiert. Die kritische Restlebensdauer RTK kann so klein werden, dass ein versagensfreier Betrieb bis zum Ende der Nutzung, beispielsweise des Flugs, nicht mehr gewährleistet werden kann und deshalb ein unmittelbares Eingreifen in den Betrieb des Triebwerks nötig wird, wie zum Beispiel durch ein Abschalten des Triebwerks im Flug. Da bereits Messwerte der charakteristischen Messgröße MC unterhalb von MCmax in einer um ein Vielfaches erhöhten Lebensdauerverbrauchsrate GA resultieren können, müssen bereits Messgrößen unterhalb des maximalen Grenzwerts MCmax, die aber über einem kritischen Grenzwert MC1 liegen, gemeldet werden, um ein Überschreiten der Lebensdauer kritischer Komponenten, was katastrophale Folgen haben kann, zu verhindern. Der meldepflichtige kritische Grenzwert MC1, in der konkreten Anwendung kritische Grenztemperatur TCAF1 genannt, wird dabei so definiert, dass die resultierende Restlebensdauer groß genug ist, um ein Entdecken des fehlerbehafteten Triebwerkszustands im Zeitraum eines geplanten Wartungsereignisses zu gewährleisten. Da für den Messbereich zwischen dem kritischen Grenzwert MC1 und dem maximalen Grenzwert MCmax, keine weitere Information in Form einer Fehlermeldung vorliegt, muss beim Überschreiten des kritischen Grenzwerts MC1 ein maximalkritischer Triebwerkszustand ZTmax, also äquivalent zum maximalen Grenzwert MCmax, angenommen werden und entsprechend unmittelbar in den Betrieb eingegriffen werden.

Ohne einen definierten vorkritischen Grenzwert MC0 zwischen dem kritischen Grenzwert MC1 und der fehlerfreien Messgröße MCF, musste bisher im regulären Betrieb von einem Triebwerkszustand ZT knapp unter dem kritischen Triebwerkszustand ZT1 ausgegangen werden, bei dem gerade noch keine kritische Lebensdauerverbrauchsrate GA vorliegt. Dementsprechend musste von einer erhöhten, vorkritischen Lebensdauerverbrauchsrate GAV ausgegangen werden und das über die gesamte Dauer eines Wartungsintervalls, was zu einer reduzierten nutzbaren Lebensdauerspanne führt. Durch den neu eingeführten vorkritischen Grenzwert MC0, hier vorkritische Grenztemperatur TCAF0 genannt, und die dazu entsprechend eingeführte Fehlermeldung beim Überschreiten desselben, ist nun eine zusätzliche Information über den Triebwerkszustand ZT verfügbar. So kann während der Abwesenheit einer Fehlermeldung zum Erreichen oder Überschreiten des vorkritischen Grenzwerts MC0, von einem neu definierten vorkritischen Triebwerkszustand ZT0 ausgegangen werden. Dementsprechend kann von einer niedrigeren, normalen Lebensdauerverbrauchsrate GAN ausgegangen werden, die niedriger als die vormals anzunehmende vorkritische Lebensdauerverbrauchsrate GAV ist. Somit können höhere nutzbare Lebensdauerspannen (bzw. Werte für die Restlebensdauer RT) freigegeben werden, was ein erster, wesentlicher Vorteil des vorgeschlagenen Verfahrens ist.

Hierbei braucht eine erhöhte, vorkritische Lebensdauerverbrauchsrate GAV lediglich für einen ungleich kürzeren Zeitraum, in dem ein Weiterbetrieb mit der MC0-Überschreitung erlaubt wird, berücksichtigt werden.

Ein zweiter Vorteil des vorgeschlagenen Verfahrens ist die effizientere Fehlerbehebung. Bei einem im Allgemeinen sehr seltenen Überschreiten des vorkritischen Grenzwerts MC0, muss, wie vormals, von einem knapp noch nicht kritischen Triebwerkszustand ZT1 ausgegangen werden, welcher allerdings im Gegensatz zu kritischen Triebwerkszuständen jenseits von ZT1, keine unmittelbare Reaktion auf die Fehlermeldung nötig macht, also mehr Zeit und somit eine größere Flexibilität bei der Durchführung von Maßnahmen, nämlich von geplanten Maßnahmen GMG für einen optimierten Betrieb, zulässt. Anstatt einen Flug z.B. durch eine Notlandung an einem eventuell abgelegenen Flughafen abkürzen zu müssen, ist es mittels dieses Verfahrens möglich, eine bestimmte Anzahl an Flügen und/oder Flugstunden zu absolvieren bevor ein Instandhaltungseinsatz, eine Reparatur oder Wartung zu einem organisatorisch günstigen Zeitpunkt durchgeführt werden kann. Dies erlaubt beispielsweise auch benötigte Ersatzteile oder Techniker im Vorhinein zu organisieren und so die Ausfallzeit des Triebwerks zu reduzieren.

Ein dritter Vorteil liegt, ebenfalls ermöglicht durch die Meldung des vorkritischen Grenzwerts MC0, in der schonenderen Betriebsweise des Gasturbinentriebwerks 1000. Indem eine weitere Verschlechterung des Triebwerkszustands ZT bis zum kritischen Triebwerkszustands ZT1, durch frühzeitige Wartungsmaßnahmen bei Erreichen des vorkritischen Grenzwerts MC0, vermieden wird, werden teure Maßnahmen wie Werftaufenthalte, Zerlegung, Reparaturen, Austausch von übergeordneten Baugruppen vermieden, oder die Wahrscheinlichkeit derartiger Ereignisse zumindest verringert.

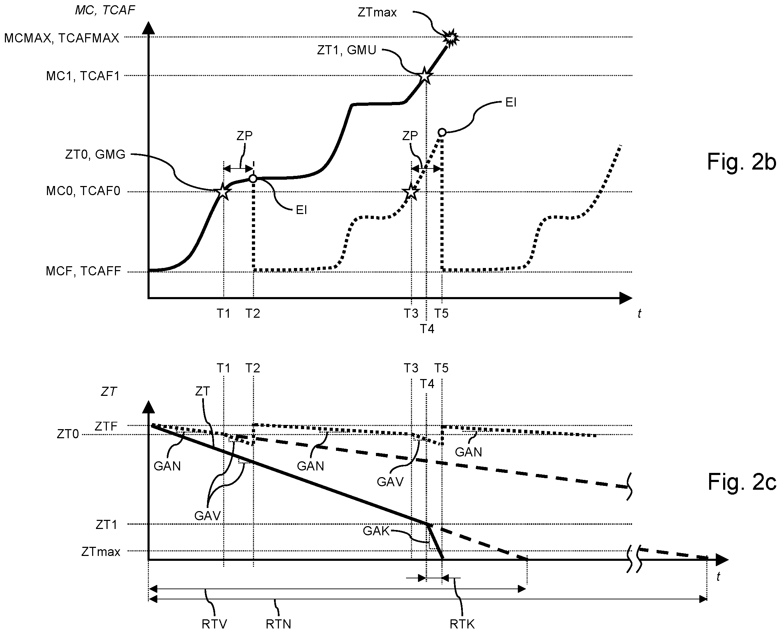

Fig. 2b zeigt ein schematisches Diagramm, in dem beispielhaft ein qualitativer zeitlicher Verlauf einer für einen Triebwerkszustand ZT eines Gasturbinentriebwerks 1000 charakteristischen Messgröße MC, hier in Form einer für den Triebwerkszustand ZT charakteristischen Temperatur TCAF, über eine Zeitachse t aufgetragen ist. Fig. 2c beschreibt schematisch einen Verlauf eines Triebwerkszustands ZT. Fig. 2c nimmt Bezug auf Fig. 2b, indem die x-Achsen übereinander dargestellt sind und die Diagramme folglich auf dieselben Zeiträume Bezug nehmen. In Fig. 2c ist erkennbar, wie mittels eines Abnutzungsrate (Lebensdauerverbrauchsrate) GA, erkennbar am Gefälle des Verlaufs, eine Restlebensdauer RT bestimmt werden kann, indem der Schnittpunkt des Verlaufes des Triebwerkszustands ZT mit der x-Achse gebildet wird. Die Restlebensdauer hängt dabei neben der Abnutzungsrate GA auch von der bisher verbrauchten Lebensdauer ab. Die in Fig.2c dargestellte kritische Restlebensdauer RTK geht beispielsweise von einem bereits abgenutzten Triebwerkszustand aus

In Fig. 2b ist mit einer durchgezogenen schwarzen Linie ein beispielhafter Verlauf der charakteristischen Messgröße MC für einen ersten Fall dargestellt, und zwar bei einem

Verfahren ohne besondere Maßnahmen bei dem Erreichen eines vorkritischen Grenzwerts MC0, bzw. vorkritischen Grenztemperatur TCAF0. Es ist erkennbar, dass die charakteristische Messgröße MC mit fortschreitender Betriebsdauer t zwar mit unterschiedlicher Steigungsrate, aber nahezu kontinuierlich ansteigt. Das Gasturbinentriebwerk 1000 wird dabei bereits unter der Annahme betrieben, dass eine vorkritische Lebensdauerverbrauchsrate GAV vorliegt, wie in Fig. 2c dargestellt. Entsprechend ergibt sich in Fig. 2c anhand der angenommenen vorkritischen Lebensdauerverbrauchsrate GAV eine vorkritische Restlebensdauer RTV. Dies bedeutet, dass aufgrund der konservativen Annahme, dass zwar noch kein kritischer Zustand erreicht ist, jedoch mangels genauerer Informationen nicht mehr von einem Normalzustand ausgegangen werden kann, ein fast kritischer Triebwerkszustand ZT1 bzw. eine vorkritische Lebensdauerverbrauchsrate GAV angenommen wird.

Mit weiterem Ansteigen der charakteristischen Messgröße, Fig. 2b, und Erreichen des kritischen Grenzwerts MC1 bzw. der kritischen Grenztemperatur TCAF1 zu einem vierten Zeitpunkt T4, wird die Annahme zur Restlebensdauer RT angepasst. Dies liegt darin begründet, dass nunmehr eine erheblich höhere Lebensdauerverbrauchsrate GA, nämlich eine kritische Lebensdauerverbrauchsrate GAK vorliegt, der innerhalb einer kritischen Restlebensdauer RTK zu einer vollständigen Abnutzung des Triebwerkszustands ZT führt. Entsprechend werden unmittelbare Maßnahmen GMU für einen sicheren Betrieb eingeleitet. Der Triebwerkszustand ZT hat zu dem vierten Zeitpunkt T4 einen kritischen Triebwerkszustand ZT1 erreicht.

In Fig. 2b und Fig. 2c ist mittels gepunkteter Linie der Verlauf von charakteristischer Messgröße MC und Triebwerkszustand ZT für einen zweiten Fall dargestellt, in dem gemäß dem offenbarten Verfahren ein vorkritischer Grenzwert MC0 bestimmt wird. Der Verlauf der charakteristischen Messgröße MC ist zunächst identisch mit dem Verlauf im ersten Fall. Zu einem ersten Zeitpunkt T1 wird jedoch das Erreichen des Grenzwerts MC0 festgestellt. Als Reaktion darauf erfolgt eine geplante Maßnahme GMG für einen optimierten Betrieb, in diesem Fall das Planen und Einleiten eines Instandhaltungseinsatzes EI. Dieser wird innerhalb eines Planungszeitraums ZP bei der nächsten geeigneten Gelegenheit durchgeführt, z.B. wenn sich das das Gasturbinentriebwerk umfassende Flugzeug in der Nähe einer Werkstatt befindet. Aufgrund der Tatsache, dass die vorkritische Restlebensdauer RTV wesentlich länger ist als die kritische Restlebensdauer RTK, kann der Planungszeitraum ZP, und somit der Zeitpunkt für die geplante Maßnahme GMG, mit größerer Flexibilität geplant werden, insbesondere im Vergleich zu einer unmittelbaren Maßnahme GMU für einen sicheren Betrieb. Nach der Durchführung des Instandhaltungseinsatzes EI zu einem zweiten Zeitpunkt T2 erfolgt eine Behebung des Fehlers und/oder Schadens, entsprechend wird der Triebwerkszustand ZT in der Betrachtung in Fig. 2c wieder auf einen Initialwert, nämlich einen fehlerfreien Triebwerkszustand ZTF zurückgesetzt. Die charakteristische Messgröße MC geht ebenso, aufgrund der Behebung des Fehlers und/oder Schadens, auf einen Initialwert, einen Messwert MCF bei fehlerfreiem Triebwerkszustand, zurück. Von dort steigt die charakteristische Messgröße MC mit fortlaufendem Betrieb des Gasturbinentriebwerks 1000 wieder an, bis an einem dritten Zeitpunkt T3 der vorkritische Grenzwert MC0 wieder erreicht wird, woraufhin eine geplante Maßnahme GMG eingeleitet, und in Form eines Instandhaltungseinsatzes EI zu einem fünften Zeitpunkt T5 durchgeführt wird.

Unabhängig von der operativen Seite des Betriebs und der Instandhaltung des Gasturbinentriebwerks 1000 können nunmehr bereits bei der planerischen Kalkulation der Restlebensdauer RT großzügigere Werte angesetzt werden, ohne die Sicherheit des Gasturbinentriebwerks 1000 zu gefährden. Dadurch, dass man durch das Erreichen des Grenzwertes MC0 eine weitere Warnmeldung erhält, kann vor dem Erreichen des Grenzwertes MC0 von einem normalen bzw. niedrigen Abnutzungsgrad GAN ausgegangen werden, der entsprechend zu einer wesentlich längeren, normalen Restlebensdauer RTN führt. Dies ist insbesondere im Vergleich zu einer vorkritischen Restlebensdauer RTV (s. Fig. 2c) zu sehen, die unterhalb des kritischen Grenzwertes MC1 stets pauschal zu Gunsten der Sicherheit angenommen werden muss, wenn keine Kenntnis über das Erreichen des vorkritischen Grenzwertes MC0 besteht.

Es wird deutlich, dass mittels der Bestimmung des vorkritischen Grenzwertes MC0 in dem zweiten dargestellten Fall, insbesondere im Vergleich zum ersten dargestellten Fall, der Triebwerkszustand ZT weniger abgenutzt wird, eine zeitlich flexiblere Durchführung von Maßnahmen wie Instandhaltungseinsätzen EI möglich ist und somit ein sicherer und wirtschaftlicherer Betrieb des Gasturbinentriebwerks 1000 erreicht werden kann.

Der Triebwerkszustand ZT beschreibt eine Eignung des Gasturbinentriebwerks 1000 für einen sicheren Betrieb, und verschlechtert sich -beeinflusst von Abnutzung und Verschleiß - mit fortdauernder Nutzung des Gasturbinentriebwerks 1000, insbesondere durch Fehler oder Versagen einzelner oder mehrerer Bauteile. Aus dem Triebwerkszustand ZT resultiert eine verbleibende Lebensdauer, die von unterschiedlichen Einflüssen abhängt, und in der Praxis anhand von Prognosen, insbesondere mit einem Sicherheitsaufschlag, in Form einer Restlebensdauer RT abgeschätzt wird.

Die Restlebensdauer RT kann als derjenige von einem Betrachtungszeitpunkt verbleibende Zeitraum gesehen werden, in dem ein sicherer Betrieb des Gasturbinentriebwerks 1000 möglich ist.

Eine generelle Herausforderung beim Betrieb des Gasturbinentriebwerks 1000 besteht darin, zum einen sicheren Betrieb zu gewährleisten, indem Instandhaltungs- und Instandsetzungsarbeiten nicht zu spät vorgenommen werden. Zum anderen ist es aus wirtschaftlichen Gesichtspunkten zu vermeiden, Instandhaltungs- und Instandsetzungsarbeiten zu früh vorzunehmen, da derartige Arbeiten mit Kosten für Arbeitsleistungen und Ersatzteile verbunden sind, und das Gasturbinentriebwerk 1000 während der Arbeiten nicht genutzt werden kann.

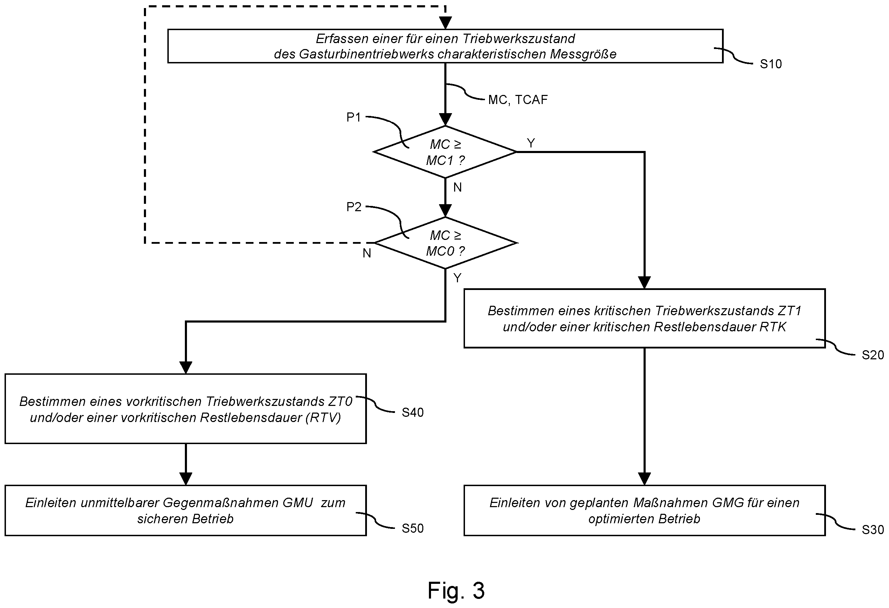

Mittels eines in Fig. 3 nicht näher gezeigten Sensors 1310 (siehe z.B. Fig. 1) kann die charakteristische Messgröße MC, hier die charakteristische Temperatur TCAF, erfasst werden.

Bei Überschreiten eines kritischen Grenzwerts MC1 wird, insbesondere durch die elektronische Steuereinheit EEC, ein kritischer Triebwerkszustand ZT1 bestimmt. Als Folge dessen wird ein Einleiten von unmittelbaren Gegenmaßnahmen GMU vorgesehen, um das Triebwerk vor einem signifikanten Schaden zu schützen. Zu derartigen unmittelbaren Gegenmaßnahmen GMU können unter anderem das Abschalten des Triebwerks zählen, insbesondere innerhalb eines definierten Zeitraums von wenigen, z. B. 10, 5 oder 2, Minuten, und/oder das Betreiben des Gasturbinentriebwerks 1000 in einem abgesicherten Modus mit reduzierter Leistung. Unmittelbare Gegenmaßnahmen GMU stellen insbesondere die Sicherheit des Flugzeugs und dessen Insassen sicher, indem sie darauf abzielen, schwerwiegendere Schäden am und/oder durch das Gasturbinentriebwerk 1000 zu vermeiden.

Gemäß dem Konzept dieser Offenbarung ist vorteilhaft vorgesehen, dass bei Überschreiten eines vorkritischen Grenzwerts MC0, der unterhalb des kritischen Grenzwerts MC1 liegt, ein vorkritischer Triebwerkszustand ZT0 bestimmt wird. Bei Überschreiten des vorkritischen Grenzwerts MC0 und Vorliegen eines vorkritischen Triebwerkszustands ZT0 können vorteilhaft geplante Maßnahmen GMG für einen optimierten Betrieb des Gasturbinentriebwerks 1000 eingeleitet werden. Im Vergleich zu unmittelbaren Gegenmaßnahmen GMU haben geplante Maßnahmen GMG für einen optimierten Betrieb den Vorteil, dass sie mit größerer zeitlicher Flexibilität vorgenommen werden können, da noch kein kritischer Triebwerkszustand ZT1 vorliegt und somit einen größeren Planungshorizont verfügbar ist. Insbesondere muss die momentane Mission nicht unterbrochen oder geändert werden. Vielmehr kann bei Vorliegen eines vorkritischen Triebwerkszustands ZT0 kurzfristig oder mittelfristig, d.h. in einem bestimmbaren Planungszeitraum ZP, ein Instandhaltungseinsatz eingeplant werden, vorteilhaft unter möglichst geringer Beeinträchtigung des Betriebsablaufs des Gasturbinentriebwerks 1000 und/oder des Flugzeugs 2000. Der Planungszeitraum ZP kann insbesondere kleiner sein als ein Wartungsintervall ZW. Es kann somit ein vorkritischer Triebwerkszustand ZT0 festgestellt werden, der bei einer Wartung, die ein Wartungsintervall ZW zurückliegt, noch nicht feststellbar war, und der sich erst innerhalb des aktuellen Wartungsintervall ZW entwickelt hat.

Fig. 3 zeigt ein schematisches Ablaufdiagramm zur Verdeutlichung eines Verfahrens gemäß dem ersten Aspekt der Offenbarung. Es kann vorteilhaft auf einer elektronischen Steuereinheit EEC eines Gasturbinentriebwerks 1000 ausgeführt werden, oder eines weiteren Geräts 400 zur Datenverarbeitung.

In einem ersten Schritt S10 erfolgt das Erfassen einer für einen Triebwerkszustand ZT des Gasturbinentriebwerks 1000 charakteristischen Messgröße MC, vorliegend in Form einer charakteristischen Temperatur TCAF. Die charakteristische Messgröße MC kann vorteilhaft kontinuierlich erfasst werden, oder in alternativen Ausführungsformen in intermittierender Weise, beispielsweise in diskreten Zeitintervallen.

Auf Bereitstellung der charakteristischen Messgröße MC erfolgt eine erste Prüfung P1, ob die charakteristische Messgröße MC in einem kritischen Bereich liegt, d.h. einen kritischen Grenzwert MC1 erreicht oder überschreitet. Vorliegend wird geprüft, ob die charakteristische Messgröße MC gleich oder größer als der kritische Grenzwert MC1 ist. Falls dies der Fall ist, wird in einem zweiten Schritt S20 ein kritischer Triebwerkszustand ZT1 bestimmt (d.h. festgelegt), und in einem dritten Schritt S30 unmittelbare Gegenmaßnahmen GMU zum sicheren Betrieb eingeleitet.

Falls die Bedingung nicht erfüllt ist, d.h. falls die charakteristische Messgröße MC kleiner ist als der kritische Grenzwert MC1, erfolgt eine zweite Prüfung P2, in der geprüft wird, ob die charakteristische Messgröße MC in einem vorkritischen Bereich liegt, d.h. einen vorkritischen Grenzwert MC0 erreicht oder überschreitet. Vorliegend wird geprüft, ob die charakteristische Messgröße MC gleich oder größer als der vorkritische Grenzwert MC0 ist. Falls dies der Fall ist, erfolgt in einem vierten Schritt S40 ein Bestimmen eines vorkritischen Triebwerkszustands ZT0, und in einem fünften Schritt S50 ein Einleiten von geplanten Maßnahmen GMG für einen optimierten Betrieb.

Falls die Bedingung nicht erfüllt ist, d.h. falls die charakteristische Messgröße MC kleiner ist als der vorkritische Grenzwert MC0, erfolgt keine weitere Aktion, und das Verfahren fährt insbesondere fort mit dem Erfassen der charakteristischen Größe MC gemäß dem ersten Schritt S10.

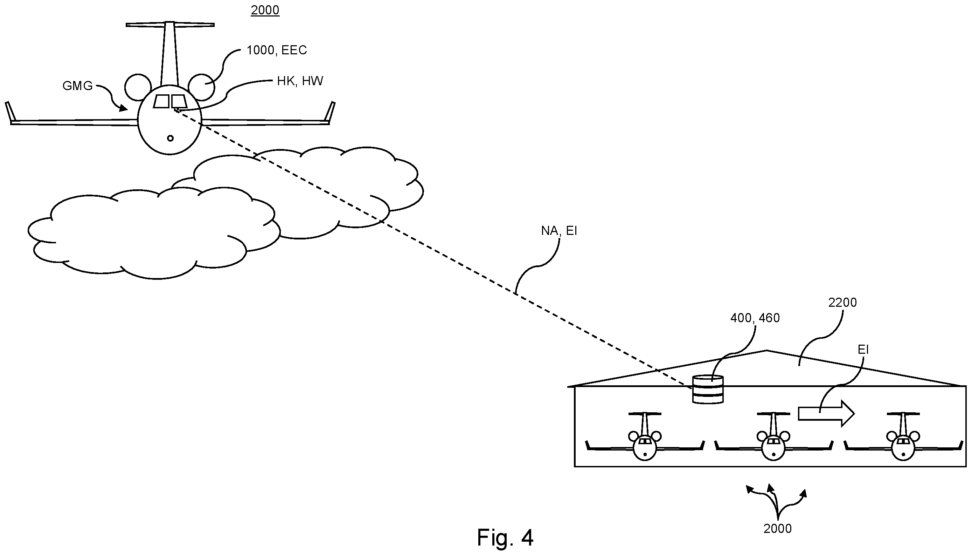

Fig. 4 zeigt ein Flugzeug 2000 gemäß dem siebten Aspekt der Offenbarung mit einem Gasturbinentriebwerk 1000 gemäß dem sechsten Aspekt der Offenbarung, sowie eine schematische Darstellung eines Verfahrens zur Planung von Instandhaltungseinsätzen EI für eine Flotte von Flugzeugen 2000, die jeweils Triebwerke 1000 aufweisen. Ein Flugzeug 2000, das zwei Gasturbinentriebwerke 1000 umfasst, ist im Betrieb, d.h. im Flug, dargestellt. Ein Verfahren zum Betrieb der Gasturbinentriebwerke gemäß dem ersten Aspekt der Offenbarung ermöglicht die Überwachung eines Triebwerkszustands ZT der jeweiligen Triebwerke 1000. Bei Bestimmen eines vorkritischen Triebwerkszustands ZT0, können gemäß dem vorgeschlagenen Verfahren geplante Maßnahmen GMG für einen optimierten Betrieb eingeleitet werden. Diese geplanten Maßnahmen GMG können beispielsweise das Anzeigen eines Kontrollhinweises HK für einen Piloten des Flugzeugs, insbesondere im Cockpit, umfassen. Alternativ oder zusätzlich können die geplanten Maßnahmen GMG das Einleiten eines Instandhaltungseinsatzes EI umfassen. Hierzu umfasst das Flugzeug ein das Verfahren ausführendes Gerät 400, insbesondere die elektronische Steuereinheit EEC, oder ein mit dieser signalführend verbundenes weiteres Gerät 400 zur Datenverarbeitung, die direkt oder z.B. über einen Piloten, in einem Nachrichtenaustausch AN mit einer bodenseitigen Instandhaltungsorganisation, ggf. mit einem Planungsserver 460, steht. Für den Nachrichtenaustausch können bekannte Protokolle, insbesondere Funkprotokolle wie UMTS, GSM, LTE, und/oder satellitenbasierte Protokolle eingesetzt werden. Der Instandhaltungs-Planungsserver 460 und/oder die Instandhaltungsorganisation kann einen organisatorisch, insbesondere wirtschaftlich, geeigneten Termin für einen Instandhaltungseinsatz EI bestimmen, insbesondere innerhalb eines Planungszeitraums ZP. Bei der Bestimmung des Termins können vorteilhaft die Auslastung einer Instandhaltungseinrichtung 2200, eine Dringlichkeit des Instandhaltungseinsatzes EI, und/oder ein Betriebsplan des Flugzeugs 2000, berücksichtigt werden.

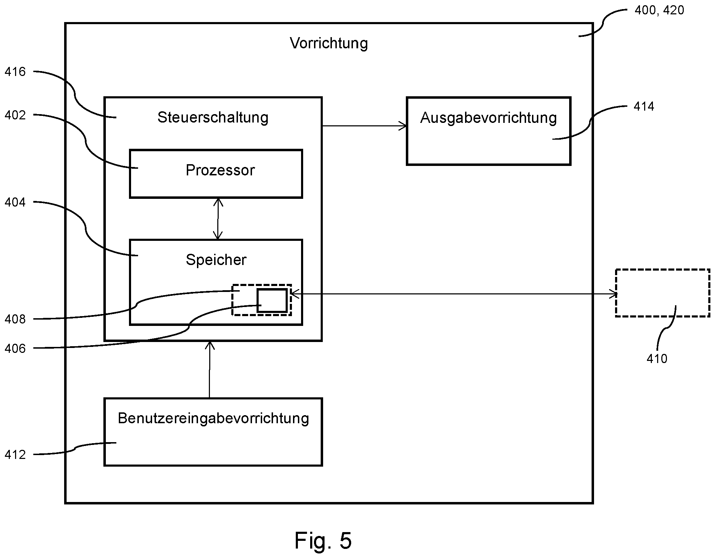

Fig. 5 zeigt ein schematisches Diagramm einer Vorrichtung 400 gemäß verschiedener Beispiele. Die Vorrichtung 400 kann, wie in diesem Fall, eine Steuerschaltung 416, eine Benutzereingabevorrichtung 412 und eine Ausgabevorrichtung 414 umfassen. In einigen Beispielen kann die Vorrichtung 400 ein Modul sein. Der hier verwendete Begriff "Modul" bezieht sich auf eine Vorrichtung, in die ein oder mehrere Merkmale zu einem späteren Zeitpunkt und möglicherweise von einem anderen Hersteller oder einem Endbenutzer eingebaut werden. Wenn es sich bei der Vorrichtung 400 um ein Modul handelt, kann die Vorrichtung 400 beispielsweise nur die Steuerschaltung 416 enthalten, und die übrigen Merkmale können von einem anderen Hersteller oder einem Endnutzer hinzugefügt werden. In einigen Beispielen kann die Vorrichtung 400 ein Personal Computer sein oder Teil eines solchen sein.

Die Steuerschaltung 416, die Benutzereingabevorrichtung 412 und die Ausgabevorrichtung 414 können über eine drahtlose Verbindung miteinander gekoppelt sein und folglich Transceiver-Schaltungen und eine oder mehrere Antennen umfassen. Zusätzlich oder alternativ können die Steuerschaltung 416, die Benutzereingabevorrichtung 412 und die Ausgabevorrichtung 414 über eine drahtgebundene Verbindung miteinander gekoppelt sein und folglich eine Schnittstellenschaltung (wie eine USB-Buchse) umfassen. Die Steuerschaltung 416, die Benutzereingabevorrichtung 412 und die Ausgabevorrichtung 414 können über eine beliebige Kombination von drahtgebundenen und drahtlosen Verbindungen miteinander verbunden sein.

Die Steuerschaltung 416 kann jede geeignete Schaltung umfassen, um die Durchführung der hier beschriebenen und in Fig. 6 dargestellten Verfahren zu bewirken. Die Steuerschaltung 416 kann umfassen: einen Prozessor 402; und/oder mindestens eine anwendungsspezifische integrierte Schaltung (ASIC); und/oder mindestens ein Field Programmable Gate Array (FPGA); und/oder Einzel- oder Multiprozessorarchitekturen; und/oder sequentielle/parallele Architekturen; und/oder mindestens eine speicherprogrammierbare Steuerung (SPS); und/oder mindestens einen Mikroprozessor; und/oder mindestens einen Mikrocontroller; und/oder eine Zentraleinheit (CPU); und/oder eine Grafikverarbeitungseinheit (GPU), um die Verfahren durchzuführen.

In verschiedenen Beispielen kann die Steuerschaltung 416 mindestens einen Prozessor 402 und mindestens einen Speicher 404 umfassen. Der Speicher 404 speichert ein Computerprogramm 408, das computerlesbare Anweisungen 406 umfasst, die, wenn sie vom Prozessor 402 gelesen werden, die Durchführung der hierin beschriebenen Verfahren bewirken, wie in Fig. 6 dargestellt. Bei dem Computerprogramm 408 kann es sich um Software oder Firmware oder um eine Kombination aus Software und Firmware handeln.

Der Prozessor 402 kann mindestens einen Mikroprozessor enthalten und kann einen Einzelkernprozessor, mehrere Prozessorkerne (z. B. einen Doppelkernprozessor oder einen Vierfachkernprozessor) oder eine Vielzahl von Prozessoren (von denen mindestens einer mehrere Prozessorkerne umfassen kann) umfassen.

Der Speicher 404 kann ein beliebiges geeignetes nicht transitorisches computerlesbares Speichermedium 410, Datenspeichergerät oder -geräte sein und kann eine Festplatte und/oder einen Festkörperspeicher (wie einen Flash-Speicher) umfassen. Bei dem Speicher 404 kann es sich um einen permanenten, nicht entfernbaren Speicher oder um einen entfernbaren Speicher handeln (z. B. ein USB-Flash-Laufwerk oder eine sichere digitale Karte). Der Speicher 404 kann Folgendes umfassen: lokalen Speicher, der während der tatsächlichen Ausführung des Computerprogramms 408 verwendet wird; Massenspeicher; und Cache-Speicher, die eine temporäre Speicherung von mindestens einem computerlesbaren oder computerverwendbaren Programmcode bieten, um die Anzahl der Abrufe von Code aus dem Massenspeicher während der Ausführung des Codes zu reduzieren.

Das Computerprogramm 408 kann auf einem nicht-übertragbaren, computerlesbaren Speichermedium 410 gespeichert sein. Das Computerprogramm kann von dem nicht flüchtigen, computerlesbaren Speichermedium 410 in den Speicher 404 übertragen werden. Bei dem nicht transitorischen, computerlesbaren Speichermedium kann es sich beispielsweise um ein USB-Flash-Laufwerk, eine Secure Digital (SD)-Karte oder eine optische Disc (wie eine Compact Disc (CD), eine Digital Versatile Disc (DVD) oder eine Blu-ray Disc) handeln. In einigen Beispielen kann das Computerprogramm 408 über ein drahtloses Signal oder über ein drahtgebundenes Signal in den Speicher 404 übertragen werden.

Eingabe-/Ausgabevorrichtungen können entweder direkt oder über zwischengeschaltete Eingabe-/Ausgabesteuerungen mit dem System gekoppelt werden. Verschiedene Kommunikationsadapter können auch mit dem Controller verbunden werden, damit die Vorrichtung 400 mit anderen Vorrichtungen oder entfernten Druckern oder Speichergeräten über dazwischenliegende private oder öffentliche Netzwerke verbunden werden kann. Nicht einschränkende Beispiele sind Modems und Netzwerkadapter für solche Kommunikationsadapter.

Die Benutzereingabevorrichtung 412 kann jede geeignete Vorrichtung umfassen, die es einem Bediener ermöglicht, die Vorrichtung 400 zumindest teilweise zu steuern. Die Benutzereingabevorrichtung 412 kann beispielsweise eine oder mehrere der folgenden Vorrichtungen umfassen: eine Tastatur, ein Keypad, ein Touchpad, ein Touchscreen-Display und eine Computermaus. Die Steuerschaltung 416 ist so konfiguriert, dass sie Signale von der Benutzereingabevorrichtung 412 empfängt.

Bei der Ausgabevorrichtung 414 kann es sich um jede geeignete Vorrichtung zur Übermittlung von Informationen an einen Benutzer handeln. Beispielsweise kann die Ausgabevorrichtung 414 eine Anzeige (wie eine Flüssigkristallanzeige oder eine Leuchtdiodenanzeige oder eine organische Leuchtdiodenanzeige mit aktiver Matrix oder eine Dünnschichttransistoranzeige oder eine Kathodenstrahlröhrenanzeige) und/oder ein Lautsprecher und/oder ein Drucker (wie ein Tintenstrahldrucker oder ein Laserdrucker) sein. Die Steuerschaltung 416 ist so angeordnet, dass sie ein Signal an die Ausgabevorrichtung 414 liefert, um die Ausgabevorrichtung 414 zu veranlassen, Informationen an den Benutzer zu übermitteln.

Das in Fig. 5 dargestellte Verfahren kann "offline" an Daten durchgeführt werden, die zuvor gemessen und aufgezeichnet wurden. Alternativ kann es auch in "Echtzeit" durchgeführt werden, d. h. im Wesentlichen zur gleichen Zeit, in der die Daten gemessen werden.

### Bezugszeichenliste (Teil der Beschreibung)

- 11: Verdichter
- 12: Einlass
- 13: Fan
- 14: Fangehäuse
- 15: Niederdruckverdichter
- 16: Hochdruckverdichter
- 17: Bypasskanal
- 18: Brennkammer
- 19: Hochdruckturbine
- 20: Mitteldruckturbine
- 21: Niederdruckturbine
- 22: Rotorwelle
- 23: Turbine
- 24: Mischergruppe
- 25: Austrittskonus
- 26: Auslass
- 400: Vorrichtung
- 402: Prozessor
- 404: Speicher
- 408: Computerprogramm
- 410: Speichermedium
- 412: Benutzereingabevorrichtung
- 414: Ausgabevorrichtung
- 416: Steuerschaltung
- 1000: Gasturbinentriebwerk
- 1010: sicherheitskritisches Bauteil
- 1050: Verdichterstufe
- 1060: Turbinenstufe
- 1062: Hochdruck-Turbinenstufe
- 1200: sekundäres Luftsystem des Gasturbinentriebwerks
- 1300: elektronische Steuereinheit
- 1310: Sensor
- 1312: Thermoelement
- 1314: thermooptischer Sensor
- 1316: Vibrationssensor
- 1318: Näherungssensor
- 2000: Flugzeug
- A: Triebwerkslängsachse
- EI: Instandhaltungseinsatz
- GA: Lebensdauerverbrauchsrate
- GAF: fehlerfreie Lebensdauerverbrauchsrate
- GAN: normale Lebensdauerverbrauchsrate
- GAV: vorkritische Lebensdauerverbrauchsrate
- GAK: kritische Lebensdauerverbrauchsrate
- GMG: geplante Maßnahmen für einen optimierten Betrieb
- GMU: unmittelbare Gegenmaßnahmen zum sicheren Betrieb
- HK: Kontrollhinweis
- MC: charakteristische Messgröße, für einen Triebwerkszustand des Gasturbinentriebwerks charakteristischen Messgröße
- MC0: vorkritischer Grenzwert der charakteristischen Messgröße
- MC1: kritischer Grenzwert der charakteristischen Messgröße
- MCF: charakteristische Messgröße bei fehlerfreiem Triebwerkszustand
- MCMax: maximaler Grenzwert der charakteristischen Messgröße
- RT: Restlebensdauer
- RTN: normale Restlebensdauer
- RTV: vorkritische Restlebensdauer
- RTK: kritische Restlebensdauer
- RTF: fehlerfreie Restlebensdauer bei fehlerfreiem Triebwerkszustand
- S10, S20, S30, S40, S50: Erster bis fünfter Schritt des Verfahrens
- SH: Hauptstrom
- SN: Nebenstrom
- TCAF: charakteristische Temperatur, für einen Triebwerkszustand des Gasturbinentriebwerks charakteristische Temperatur
- TCAF0: vorkritische Grenztemperatur
- TCAF1: kritische Grenztemperatur
- TCAFF: charakteristische Temperatur bei fehlerfreiem Triebwerkszustand
- TCAFMax: maximalkritische Grenztemperatur
- ZT: Triebwerkszustand
- ZT0: vorkritischer Triebwerkszustand, Eintrittsschwellwert in den vorkritischen Triebwerkszustand
- ZT1: kritischer Triebwerkszustand, Eintrittsschwellwert in den kritischen Triebwerkszustand
- ZTF: fehlerfreier, nicht abgenutzter Triebwerkzustand
- ZTMax: maximalkritischer Triebwerkszustand

## Patentansprüche

1. Verfahren zum Betreiben eines Gasturbinentriebwerks (1000) eines Flugzeugs (2000), wobei das Gasturbinentriebwerk (1000) eine elektronische Steuereinheit (1300), aufweist, und wobei das Verfahren umfasst:
- Erfassen einer für einen Triebwerkszustand (ZT) des Gasturbinentriebwerks (1000) charakteristischen Messgröße (MC) mittels eines mit der elektronischen Steuereinheit (1300) signalführend gekoppelten Sensors (1310);
- Bei einem Überschreiten eines kritischen Grenzwerts (MC1): Bestimmen eines kritischen Triebwerkszustands (ZT1) und/oder einer kritischen Restlebensdauer (RTK), und Einleiten von unmittelbaren Gegenmaßnahmen (GMU) zum sicheren Betrieb;
**dadurch gekennzeichnet, dass** das Verfahren weiter umfasst:
- Bei einem Überschreiten eines vorkritischen Grenzwerts (MC0): Bestimmen eines vorkritischen Triebwerkszustands (ZT0) und/oder einer vorkritischen Restlebensdauer (RTV), und Einleiten von geplanten Maßnahmen (GMG) für einen optimierten Betrieb;
- wobei der vorkritische Grenzwert (MC0) niedriger ist als der kritische Grenzwert (MC1).

2. Verfahren nach Anspruch 1, wobei die unmittelbaren Gegenmaßnahmen (GMU) für einen sicheren Betrieb ein Bereitstellen eines Warnhinweises (HW) und/oder eine Abschaltung des Gasturbinentriebwerks (1000) umfassen.

3. Verfahren nach Anspruch 1 oder 2, wobei die geplanten Maßnahmen (GMG) für einen optimierten Betrieb ein Bereitstellen eines Kontrollhinweises (HK) und/oder Einleiten eines Instandhaltungseinsatzes (EI) des Gasturbinentriebwerks (1000) umfassen.

4. Verfahren nach einem der vorherigen Ansprüche, wobei in Abhängigkeit des Triebwerkszustands (ZT) eine Lebensdauerverbrauchsrate (GA) bestimmt wird, mittels der eine Restlebensdauer (RT) bestimmt werden kann.

5. Verfahren nach einem der vorherigen Ansprüche, wobei der Sensor (1310) ein Thermoelement (1312), ein thermooptischer Sensor (1314), ein Vibrationssensor (1316) oder ein Näherungssensor (1318) ist.

6. Verfahren nach einem der vorherigen Ansprüche, wobei die für den Triebwerkszustand (ZT) charakteristische Messgröße (MC) eine für den Triebwerkszustand (ZT) charakteristische Temperatur (TCAF) ist, der vorkritische Grenzwert (MC0) eine vorkritische Grenztemperatur (TCAF0), und der kritische Grenzwert (MC1) eine kritische Grenztemperatur (TCAF1).

7. Verfahren nach einem der vorherigen Ansprüche, wobei
- die für den Triebwerkszustand (ZT) charakteristische Messgröße (MC) eine Messgröße in einem sekundären Luftsystem (1200) des Gasturbinentriebwerks (1000) ist.

8. Verfahren nach einem der vorherigen Ansprüche, wobei die für den Triebwerkszustand (ZT) des Gasturbinentriebwerks (1000) charakteristische Messgröße (MC) an oder in einem sicherheitskritischen Bauteil (1010) gemessen wird, wobei
- das sicherheitskritische Bauteil (1010) in einem sekundären Luftsystem (1200) des Gasturbinentriebwerks (1000) angeordnet ist, und/oder
- die für den Triebwerkszustand (ZT) des Gasturbinentriebwerks (1000) charakteristische Messgröße (MC) eine Messgröße in einem sekundären Luftsystem (1200) des Gasturbinentriebwerks (1000) ist.

9. Verfahren nach Anspruch 8, wobei das sicherheitskritische Bauteil (1010) die mindestens eine Turbinenstufe (1060), insbesondere eine Hochdruck-Turbinenstufe (1062), oder ein Bauteil davon ist.

10. Verfahren zur Planung von Instandhaltungseinsätzen (EI) für mindestens ein Gasturbinentriebwerk (1000) eines Flugzeugs (2000), wobei ein Instandhaltungseinsatz (EI) mit einem Verfahren nach einem der vorhergehenden Ansprüche eingeleitet wird.

11. Eine Vorrichtung (400), die Folgendes umfasst:
- mindestens einen Prozessor (402);
- mindestens einen Speicher (404), der computerlesbare Anweisungen (406) enthält;
- wobei der mindestens eine Prozessor (402) so konfiguriert ist, dass er die computerlesbaren Anweisungen (406) liest, um die Durchführung des Verfahrens nach einem der vorhergehenden Ansprüche zu bewirken.

12. Ein Computerprogramm (408), das, wenn es von einem Computer gelesen wird, die Durchführung des Verfahrens nach einem der Ansprüche 1 bis 10 bewirkt.

13. Nicht-transitorisches, computerlesbares Speichermedium (410) mit computerlesbaren Anweisungen (406), die, wenn sie von einem Computer (420) gelesen werden, die Durchführung des in einem der Ansprüche 1 bis 10 beanspruchten Verfahrens bewirken.

14. Gasturbinentriebwerk (1000) eines Flugzeugs (2000), umfassend eine elektronische Steuereinheit (1300), mindestens eine Verdichterstufe (1050) und mindestens eine Turbinenstufe (1060) aufweist, wobei die elektronische Steuereinheit (1300) ausgebildet ist zur Durchführung des in einem der Ansprüche 1 bis 10 beanspruchten Verfahrens.

15. Flugzeug (2000), umfassend mindestens ein Gasturbinentriebwerk (1000) nach Anspruch 14.
